# EUROPÄISCHE PATENTSCHRIFT

(11) **EP 1 879 785 B1**
(45) Veröffentlichungstag und Bekanntmachung des Hinweises auf die Patenterteilung: **31.12.2008**
(21) Anmeldenummer: 07722050.7
(22) Anmeldetag: 13.03.2007
(51) Int. Cl.: B62D 55/00

(54) **MEHRFACHANTRIEB FÜR RAUPENFAHRWERK**
MULTIPLE DRIVE FOR TRACKED RUNNING GEAR
ENTRAINEMENT MULTIPLE POUR TRAIN DE ROULEMENT A CHENILLES

(30) Priorität: 05.04.2006 DE 102006016728
(43) Veröffentlichungstag der Anmeldung: 23.01.2008
(73) Patentinhaber: Terex Demag GmbH, 66482 Zweibrücken (DE)
(72) Erfinder: RIEDINGER, Harald, 66482 Zweibrücken (DE); NÖSKE, Ingo, 66482 Zweibrücken (DE); RUTZ, Werner, 66851 Queidersbach (DE)
(74) Vertreter: Meissner, Peter E.
(86) Internationale Anmeldenummer: PCT/DE2007/000484
(87) Internationale Veröffentlichungsnummer: WO 2007/112721

(56) Entgegenhaltungen:
- GB-A- 191 105 857
- US-A- 3 872 939
- US-A1- 2002 104 693

## Beschreibung

Die Erfindung betrifft ein Raupenfahrwerk, bei dem mindestens zwei Fahrwerke parallel zueinander angeordnet sind und jedes Fahrwerk einen Längsträger und eine in Längsrichtung des Längsträgers um diesen umlaufende, ein Ober- und ein Untertrum bildende Fahrwerkskette aufweist und mindestens einen Fahrantrieb, bestehend aus Motor, Getriebe und ein in die Fahrwerkskette kämmendes Antriebszahnrad sowie ein Umlenkrad besitzt, welches durch Verschieben relativ zum feststehenden Teil des Längsträgers ein Kettenspannen ermöglicht. Ein derartiges Raupenfahrwerk ist aus der US 2002/104693 A bekannt.

Bei der Entwicklung von Mobilkranen mit sehr großen Leistungen ist nicht nur die Veränderung der Last tragenden Teile des Kranes zu berücksichtigen, sondern auch die der Mobilität sichernden Teile, also der Fahrwerke.

Für Mobilkrane dieser Kranklasse, die einen hohen Eigengewichtsanteil aufweisen und auch unter Maximallast verfahrbar sein müssen, ist es ganz wesentlich, einen geeigneten und kraftvollen Antrieb in das Fahrwerk zu installieren, der über ausreichende Vortriebskräfte (Fahrantriebsleistung) verfügt. Für dieser Kran-Größenklassen sind solche geeigneten Fahrantriebe am Markt nur bis zu gewissen Größen/Leistungen erhältlich, insofern kann nicht jede Anforderung durch den Kauf eines entsprechend groß dimensionierten Antriebs realisiert werden.

Es ist daher die Aufgabe der Erfindung ein Raupenfahrwerk zu schaffen, dass sich an unterschiedliche Leistungsanforderungen ähnlich einem Baukastenprinzip anpassen lässt.

Gelöst wird diese Aufgabe erfindungsgemäß bei einem Raupenfahrwerk, bei dem mindestens zwei Fahrwerke parallel zueinander angeordnet sind und jedes Fahrwerk einen Längsträger und eine in Längsrichtung des Längsträgers um diesen umlaufende, ein Ober-und ein Untertrum bildende Fahrwerkskette aufweist und mindestens einen Fahrantrieb, bestehend aus Motor, Getriebe und ein in die Fahrwerkskette kämmendes Antriebszahnrad sowie ein Umlenkrad besitzt, welches durch Verschieben relativ zum feststehenden Teil des Längsträgers ein Kettenspannen ermöglicht,
dadurch dass auf das Obertrum wirkend mindestens ein zusätzlicher Fahrantrieb auf dem Längsträger montierbar ist, wobei die Fahrwerkslänge im wesentlichen unverändert bleibt.

Vorzugsweise ist der zusätzliche Fahrantrieb lösbar am Längsträger befestigt, wobei es insbesondere zweckmäßig ist, wenn der zusätzliche Fahrantrieb am Ende des Längsträgers angeordnet ist.

Bei Mobilkranen, die über ein aus Rädern und Achsen bestehendes Fahrwerk verfügen, ist es zunächst einmal möglich, die Anzahl der angetriebenen Räder oder Achsen zu verändern, insbesondere zu erhöhen.

Dieses kann zwar zu Transportproblemen führen, weil sich hierdurch die Achslast, die für den Straßentransport einzuhalten ist unzulässig verändern kann. Grundsätzlich ist aber auf diese Weise eine Anpassung möglich.

Anders sieht es bei Raupenfahrwerken aus, weil hier bauartbedingt andere Verhältnisse vorliegen und beispielsweise bei einem Mehrfachantrieb auch eine Erhöhung der Massen dadurch auftritt, dass eine zahlenmäßige Erweiterung der verwendeten Kettenglieder notwendig ist, da die Antriebskette über alle Antriebe geführt werden muss und diese für sich mehr Bauraum und folglich Kettenlänge in Anspruch nehmen.

Erfindungsgemäß ist die Verwendung zusätzlicher Antriebe vorgesehen, die fest am Längsträger installiert oder bei Bedarf montierbar sind.
So kann durch geschicktes Hintereinanderschalten mehrerer Antriebe die Fahrantriebsleistung auch mit marktgängigen Standard-Fahrantrieben deutlich gesteigert werden. Ein ganz wesentlicher Aspekt ist die einseitige Anordnung dieses Mehrfachantriebes an einem Ende des Fahrwerks, in der Regel an dem der Fahrtrichtung abgewandten Ende, um der Funktion des Kettenspannens Rechnung zu tragen. Hierbei wird durch Verschieben des Umlenkrades die Fahrkette in einen definierten Vorspannzustand gebracht. Würde sich der Antrieb, jeweils auf die Vorder- und Rückseite des Fahrwerks aufgeteilt, an jeweilig einem Ende des Fahrwerks bzw. Längsträgers befinden, ist ein Kettenspannen nur noch dann möglich, wenn eine der Antriebseinheiten relativ zur anderen im Längsträger verschoben wird. Dieses stellt einen nicht unerheblichen konstruktiven Aufwand dar, da die durch die extremen Fahrbelastungen entstehenden Kräfte durch den kompletten Schiebemechanismus in die Fahrwerksstruktur eingetragen werden müssen. Eine ähnliche Antriebsanordnung wurde beim sog. Terex-Quadro-Antrieb schon realisiert.

Zum Verändern der Kettenspannung ist - wie zuvor schon beschrieben - üblicherweise ein Umlenkrad vorgesehen, das mittels einer Verschiebeanordnung relativ zum feststehenden Teil des Längsträgers verschiebbar ist.

Mit der Erfindung des einseitigen Mehrfachantriebes ist es möglich Schwerlastfahrzeuge, insbesondere auf Raupenfahrwerken, wie hier am Beispiel eines mobilen Krans dargestellt, mit ausreichend installierter Fahrleistung auszustatten. Durch die Anordnung des Mehrfachantriebes vorzugsweise an einem Ende des Fahrträgers ist es weiterhin auf einfache Weise möglich, die erforderliche Kettenspannung mit Hilfe eines verschieblichen Umlenkrades herbeizuführen, welches sich auf der dem Antrieb abgewandten Seite des Fahrwerks befindet. Durch den Aspekt eines adaptierbaren Mehrfachantriebes gewinnt diese Erfindung deutliche Vorteile durch die Verfügbarkeit von zusätzlich einbringbarer Antriebsleistung. Diese ist, da adaptierbar, bei Bedarf zusätzlich installierbar, bzw. zum Vorteil geringerer Transportgewichte des Fahrwerks, von diesem trennbar und separat transportierbar ausgestaltet. Durch die Möglichkeit, einen Mehrfachantrieb auf einem Ende eines Fahrwerkträgers anzuordnen, ist es durchaus denkbar, grundsätzlich diese Fahrantriebsleistung steigernde Maßnahme derart zu installieren, dass zusätzlich zu dem einen Mehrfachantrieb auch noch ein weiterer Fahrantrieb auf dem verschieblichen Ende (auf der Kettenspannseite) zum Einsatz kommt. Dieses schließt insbesondere den Einsatz dieser Erfindung bei den zuvor schon erwähnten Terex-Quadro-Fahrwerken mit ein, bei denen in der Standardvariante schon 4 Fahrantriebe am gesamten Fahrwerk, je zwei pro Raupenseite, installiert sind. Durch den Einsatz dieses Mehrfachantriebes ergibt sich dann ein Fahrwerkskonzept, in welchem in Summe 6 oder mehr Antriebe installiert werden. So ist es grundsätzlich auch denkbar, durch die wiederholte Verwendung des Mehrfachantriebes an ein und demselben Fahrwerk auch die Variante des beidseitigen Mehrfachantriebs auszuführen, bei der auf jeder Raupenfahrwerkseite, sowohl in Fahrtrichtung vorne wie auch entgegen dieser ein Mehrfachantrieb installiert wird. Durch diese erfindungsgemäße Ausgestaltung läßt sich die Fahrantriebsleistung weiter steigern und im Prinzip jedes gewünschte Leistungsniveau erzielen.

Zusammengefasst ergeben sich somit eine Reihe von Vorteilen:

Installation von mehr Fahrantriebsleistung, entweder fest installiert oder bedarfsweise durch eine Adapterlösung an einen bestehenden, modular oder nicht modular aufgebauten Raupenträger. Es ist möglich, durch die Mehrfachanordnung marktgängiger Standardgetriebe die erforderliche Fahrantriebsleistung zu installieren, ohne auf große und teure Antriebseinheiten, sofern überhaupt am Markt erhältlich, ausweichen zu müssen.

Generell die Gewährleistung ausreichender Fahrantriebsleistung bei Großgeräten, deren Eigengewicht und Last oftmals unter widrigen Untergrundverhältnissen mobil verfahren werden müssen, wie das am Beispiel eines Gittermast-Raupenkrans der Fall ist.

Variable Einsatzmöglichkeiten als Standard- oder Mehrfachantrieb einfach realisierbar durch adaptierbare Einheiten.

Vielfältigere Einsatzmöglichkeiten eines Krans mit modular anpassbaren Raupeneinheiten, insbesondere im Hinblick auf die Manövrierfähigkeit und das Losbrechverhalten auf der Baustelle.

Die Erfindung soll nachfolgend an Ausführungsbeispielen erläutert werden:

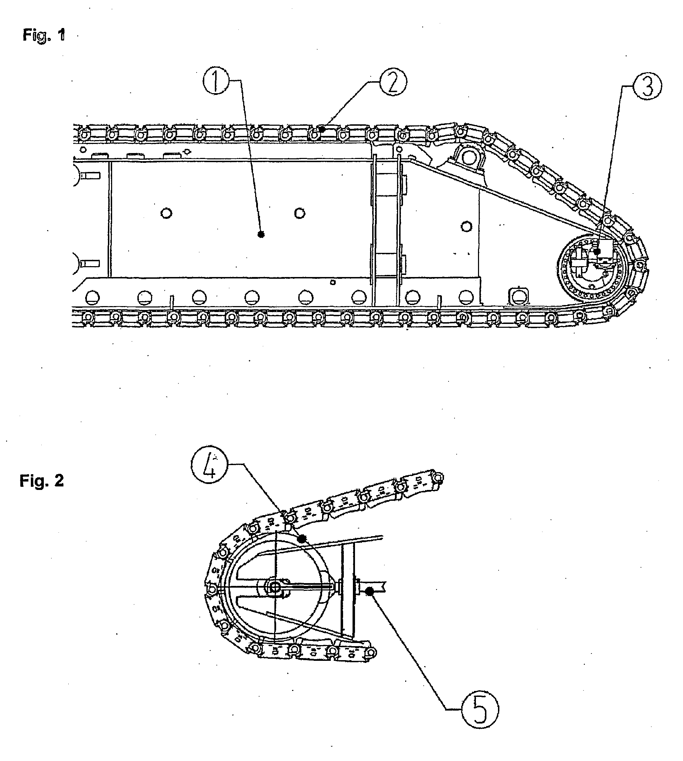

Fig. 1 Darstellung eines Fahrantriebes, wie er als Standard-Antrieb zur Zeit schon Verwendung findet. Der Antrieb befindet sich in der Regel und wie hier dargestellt auf der der Fahrtrichtung entgegengesetzten Seite des Fahrwerks.
Fig. 2 Darstellung der dem Fahrantrieb gegenüberliegenden Fahrwerksseite, die in der Regel und wie hier dargestellt in Fahrtrichtung vorne liegt. Hier ist die einfache konstruktive Lösung dargestellt, wie durch Verwendung eines verschieblichen Umlenkrades ein einfaches Vorspannen der Fahrkette realisiert werden kann.

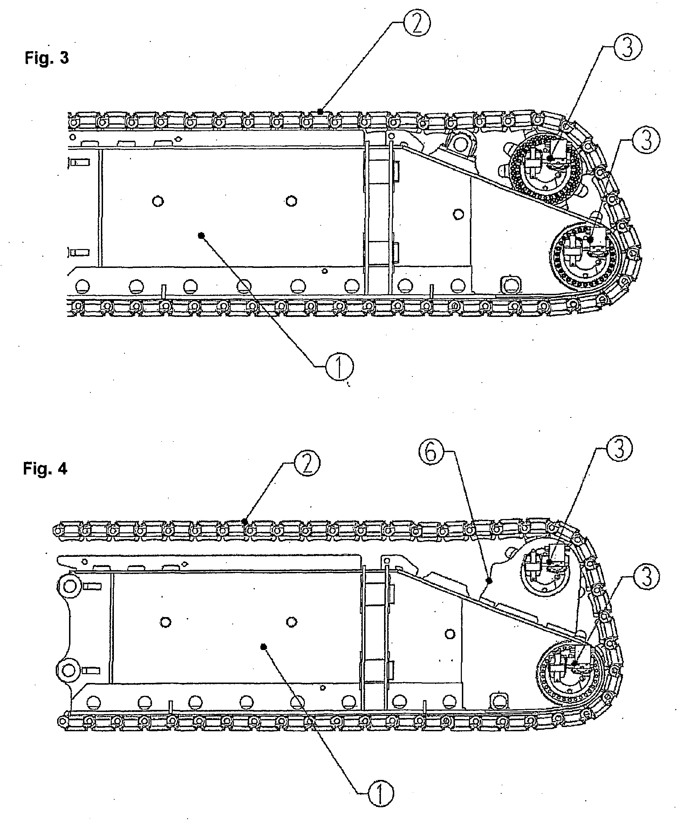

Fig. 3 Prinzipskizze eines erfindungsgemäßen Mehrfachantriebes, hier ausgeführt als Doppel-Antrieb, welcher eine deutlich gesteigerte Fahrantriebsleistung in das Fahrwerk installiert, dargestellt als Festeinbau.
Fig. 4 Prinzipskizze eines erfindungsgemäßen Mehrfachantriebes, hier ausgeführt als Doppel-Antrieb, welcher sich durch seine adaptierbare Anbaumöglichkeit als Flanschlösung auszeichnet. Die Prinzipskizze zeigt den Adapter dieses zusätzlichen Antriebs, der sich durch Schrauben-, Bolzen- oder ähnliche Anbauarten auf ein vorhandenes, entsprechend vorbereitetes Fahrwerk installieren läßt.

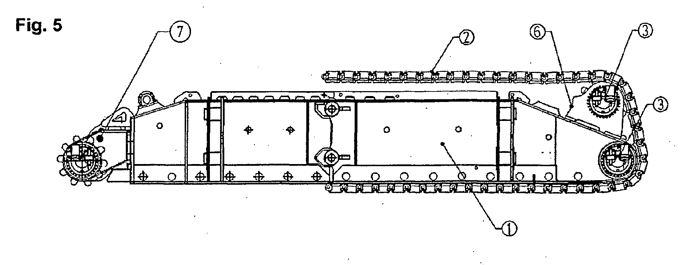

Fig. 5: Prinzipskizze für die Verwendung eines erfindungsgemäßen Mehrfachantriebes an einem Kran mit vorhandenem Terex-Quadro Antrieb, der in dieser Variante über 4 Fahrantriebe (pro Raupe jeweils 2) verfügt und durch den Anbau des Mehrfachantriebes zusätzliche Antriebsleistung erhält.

## Patentansprüche

1. Raupenfahrwerk, bei dem zwei Fahrwerke parallel zueinander angeordnet sind und jedes Fahrwerk einen Längsträger (1) und eine in Längsrichtung des Längsträgers um diesen umlaufende, ein Ober und ein Untertrum bildende Fahrwerkskette (2) aufweist und mindestens einen Fahrantrieb (3), bestehend aus Motor, Getriebe und ein in die Fahrwerkskette kämmendes Antriebszahnrad sowie ein Umlenkrad (4) besitzt, welches durch Verschieben relativ zum feststehenden Teil des Längsträger ein Kettenspannen ermöglicht,
**dadurch gekennzeichnet,**
**dass** auf das Obertrum wirkend mindestens ein zusätzlicher Fahrantrieb (3) auf dem Längsträger vorhanden ist, wobei die Fahrwerkslänge verändert oder unverändert bleibt.

2. Raupenfahrwerk nach Anspruch 1,
**dadurch gekennzeichnet,**
**dass** mindestens ein zusätzlicher Fahrantrieb lösbar am Längsträger befestigbar ist.

3. Raupenfahrwerk nach Anspruch 1,
**dadurch gekennzeichnet,**
**dass** mindestens ein zusätzlicher Fahrantrieb fest am Längsträger installiert ist.

4. Raupenfahrwerk nach Anspruch 3,
**dadurch gekennzeichnet,**
**dass** der zusätzliche Fahrantrieb am Ende des Längsträgers angeordnet ist.

5. Raupenfahrwerk nach einem der vorstehenden Ansprüche,
**dadurch gekennzeichnet,**
**dass** ein weiterer zusätzlicher Fahrantrieb am anderen Ende des Längsträgers angeordnet ist.

6. Raupenfahrwerk nach einem der vorstehenden Ansprüche,
**dadurch gekennzeichnet,**
**dass** mindestens ein zusätzlicher Fahrantrieb an beliebiger Stelle im Obertrum des Längsträgers angeordnet ist.

7. Raupenfahrwerk nach einem der vorstehenden Ansprüche,
**dadurch gekennzeichnet, dass**
zumindest eine Antriebseinheit mittels einer Verschiebeanordnung relativ zum feststehenden Teil des Längsträgers verschiebbar ist.

## Claims

1. A tracked undercarriage, in which two undercarriages are arranged parallel to each other and each undercarriage has a longitudinal support (1) and a undercarriage track (2) circulating around the longitudinal support in the longitudinal direction of the latter and forming an upper run and a lower run, and has at least one traction drive (3), comprising an engine, a gearbox and a driving toothed wheel meshing in the undercarriage track, and a reversing wheel (4), which permits tensioning of the track by displacement relative to the stationary part of the longitudinal support, **characterized in that** at least one additional traction drive (3) acting upon the upper run is provided on the longitudinal support, wherein the length of the undercarriage is altered or remains unchanged.

2. A tracked undercarriage according to Claim 1, **characterized in that** at least one additional traction drive is capable of being fastened to the longitudinal support in a detachable manner.

3. A tracked undercarriage according to Claim 1**, characterized in that** at least one additional traction drive is mounted in a fixed manner on the longitudinal support.

4. A tracked undercarriage according to Claim 3, **characterized in that** the additional traction drive is arranged at the end of the longitudinal support.

5. A tracked undercarriage according to any one of the preceding Claims, **characterized in that** a further additional traction drive is arranged at the other end of the longitudinal support.

6. A tracked undercarriage according to any one of the preceding Claims, **characterized in that** at least one additional traction drive is arranged at any point in the upper run of the longitudinal support.

7. A tracked undercarriage according to any one of the preceding Claims, **characterized in that** at least one drive unit is displaceable relative to the stationary part of the longitudinal support by means of a displacement device.

## Revendications

1. Train de roulement à chenilles, pour lequel deux trains de roulement sont disposés parallèlement l'un à l'autre et chaque train de roulement présente un longeron (1) et une chaîne de train de roulement (2) entourant le longeron en direction longitudinale de celui-ci et formant un brin supérieur et un brin inférieur, et possède au moins un système d'entraînement (3), constitué d'un moteur, d'un réducteur et d'une roue dentée d'entraînement s'engrenant dans la chaîne de train de roulement ainsi qu'une roue de renvoi (4), laquelle permet de tendre la chaîne par déplacement relativement à la partie fixe du longeron,
**caractérisé**
**en ce**ci qu'au moins un système d'entraînement supplémentaire (3) agissant sur le brin supérieur peut être monté sur le longeron, la longueur du train de roulement changeant ou restant inchangée.

2. Train de roulement à chenilles suivant la revendication 1,
**caractérisé**
**en ce qu'**au moins un système d'entraînement supplémentaire peut être fixé de manière amovible au longeron.

3. Train de roulement à chenilles suivant la revendication 1,
**caractérisé**
**en ce qu'**au moins un système d'entraînement supplémentaire est installé à demeure sur le longeron.

4. Train de roulement à chenilles suivant la revendication 3,
**caractérisé**
**en ce que** le système d'entraînement supplémentaire est disposé à l'extrémité du longeron.

5. Train de roulement à chenilles suivant l'une des revendications précédentes,
**caractérisé**
**en ce qu'**un autre système d'entraînement supplémentaire est disposé à l'autre extrémité du longeron.

6. Train de roulement à chenilles suivant l'une des revendications précédentes,
**caractérisé**
**en ce qu'**au moins un autre système d'entraînement supplémentaire est disposé à un endroit quelconque dans le tronçon supérieur du longeron.

7. Train de roulement à chenilles suivant l'une des revendications précédentes,
**caractérisé**
**en ce qu'**au moins une unité d'entraînement est déplaçable à l'aide d'un dispositif de déplacement relativement à la partie fixe du longeron.
